# EUROPEAN PATENT SPECIFICATION

(11) **EP 3 207 836 B1**
(45) Date of publication and mention of the grant of the patent: **29.08.2018**
(21) Application number: 17000185.3
(22) Date of filing: 07.02.2017
(51) Int. Cl.: A47J 31/36, A47J 31/44

(54) **INFUSING UNIT FOR PREPARING BEVERAGES**
AUFGUSSEINHEIT ZUM ZUBEREITEN VON GETRÄNKEN
UNITÉ D'INFUSION POUR PRÉPARER DES BOISSONS

(30) Priority: 19.02.2016 IT UB20160846
(43) Date of publication of application: 23.08.2017
(73) Proprietor: Sandenvendo Europe S.p.a., 15030 Coniolo (AL) (IT)
(72) Inventor: SPAGNA, Danilo, 15030 Coniolo (AL) (IT)
(74) Representative: Garavelli, Paolo

(56) References cited:
- EP-A1- 1 795 093
- EP-B1- 2 068 686
- JP-A- H09 265 574
- US-A- 5 657 683
- US-A1- 2014 314 921
- US-A1- 2014 360 379

## Description

The present invention refers to an infusing unit for preparing beverages.

In particular, the present invention refers to systems for preparing beverages in which it is necessary to check the thermal behaviour of such infusing unit.

The present invention starts from patent US8601937B2 dealing with an apparatus for preparing coffee comprising an infusion chamber to receive programmable amount of ground coffee and combine the ground coffee with amounts of hot pressurized water, a piston for compressing coffee ground in the delivery chamber, and an O-ring assembled outside the piston in order to keep a gasket under pressure sealing against the wall of the infusion chamber.

Apparatus for beverages are known, comprising elements or parts or accessories for the production of boiling water in beverages, through control systems for water level and temperature.

The prior art is given by patents dealing with coffee apparatuses capable of quickly heating the beverage in a high amount. For example, patent US5311812A refers to a device for quickly heating coffee, having a great capacity, 1, 1.5 or 2 litres, to be used in canteens and the like. The device comprises a housing, a filter-holder arranged above a coffee tank, a spraying head arranged directly above the filter-holder, a water tank arranged directly above the spraying head and suitable for heating a pre-set amount of water corresponding to the amount of water necessary for making the related amount of coffee to perform in a cycle, control means of the water entry level, directly through a connection, towards heating means near the tank bottom.

Substantially, patent US5311812A solves the problem of batching the entry of water to avoid heating an amount of excess water which then remains unused.

The prior art is also represented by patents about systems for dispatching beverages, on-demand, wherein the delivery of beverages is modulated by changing the water temperature, depending on a request. For example, patent US8225708B2 refers to a system for delivering beverages equipped with a hot water plant with temperature selectable upon request, comprising a heating chamber with a chamber body of hot water whose volume is substantially lower than the volume of beverage produced during a single preparation cycle, a heating element to quickly modify the water temperature in the chamber body during a single preparation cycle and a microprocessor-type controller to control the heating element, in reply to temperature sensors. The microprocessor-type controller allows preparing different types of beverages, with delivery water with different temperatures pre-set in reply to a manual actuating switch. The delivery water temperature can also be modified, from a higher temperature, at the beginning of a preparation cycle, to a lower temperature, at the end of the same preparation cycle.

Substantially, patent US8225708B2 solves the problem of being able to differentiate the type of beverages which can be delivered through the selection of the value of the water temperature and the modulation of the heat contribution during a single heating cycle.

The prior art is also given by patents about apparatuses for delivering beverages adapted to check the flow of water delivered before it flows out in the tank and recovering humidity to reduce the water leakages through evaporation before fermenting. For example, patent US5251541A refers to an apparatus for beverages which uses a water control unit, a humidity recovering unit, a thermostatic water sensor and an easily removable spraying head. The control unit regulates the water flow, from the filling basing to the tank, through a valve interconnected with a cover which covers an opening for passing water. Till the cover is kept closed, water from the basin cannot flow in the tank, and therefore it cannot produce the fermented beverage. A sleeve placed in the water filling opening allows housing the condensate and reducing the water surface which can be stricken by air through the fermenting apparatus avoiding the accumulation of minerals and other deposits.

A further prior art is given by US-A-2014/0314921, disclosing an infusing unit according to the preamble of independent claim 1.

The above prior art does not solve the problem of the thermal alteration of the beverage due to the thermal impact following the contact of heated water with the cold walls of a container.

Therefore, object of the present invention is solving the above prior art problem, by providing an infusing unit which avoids any type of thermal shock in contact with a liquid.

A further object of the present invention is providing an infusing unit which allows reducing the amount of heat absorbed by cold parts during the infusion of the beverage, being coffee, tea, etc.

A further object is providing an infusing unit which allows improving and refining the final value of the infusion temperature.

A further object of the present invention is providing an infusing unit which allows decreasing the thermal dispersion during the infusion process.

The above and other objects and advantages of the invention, as will appear from the following description, are obtained with a infusing unit for preparing beverages as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:

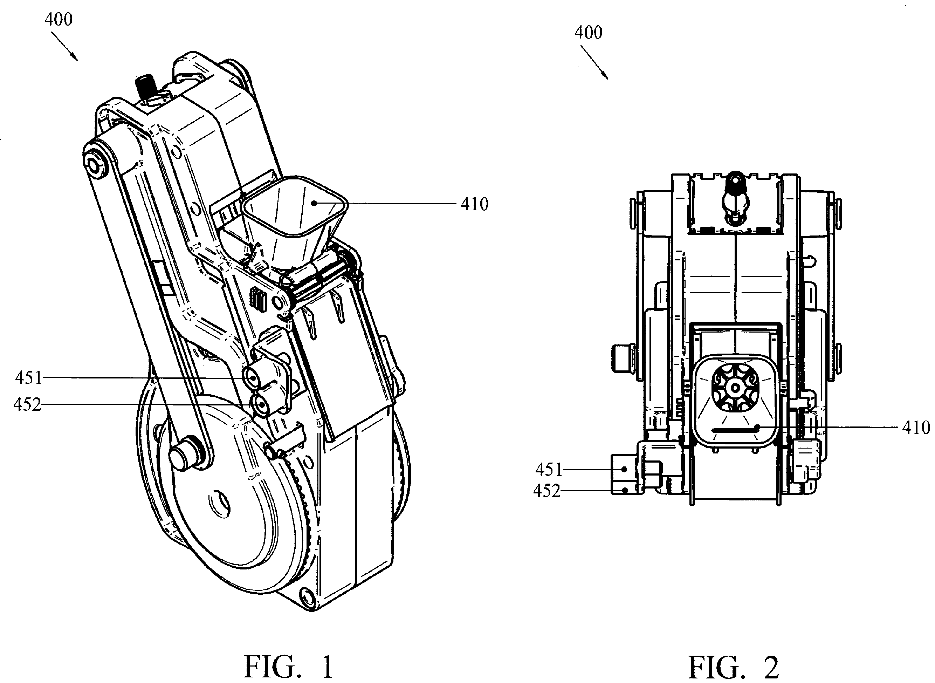

- Figures 1 and 2 respectively show a perspective and a top view of a preferred embodiment of the infusing unit for preparing beverages according to the present invention;

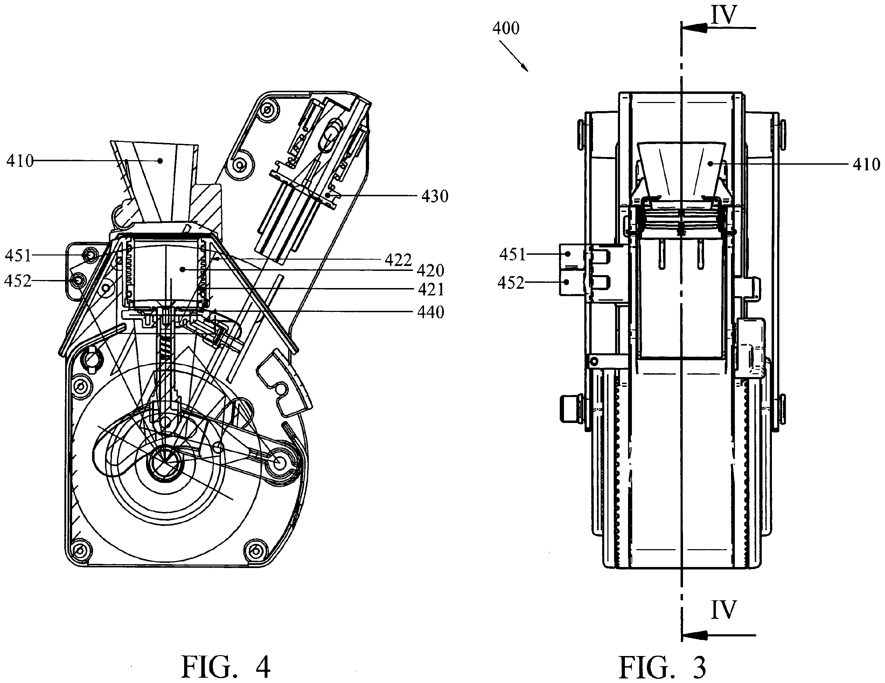

- Figure 3 shows a front view of the infusing unit according to the present invention; and
- Figure 4 shows a sectional view along the section line IV-IV of Figure 3.

With reference to the Figure, it is possible to note that an infusing unit 400 for preparing beverages according to the present invention comprises at least one hopper 410 adapted to house a certain dose of a ground substance, at least one infusion chamber 420 used for preparing the infused beverage and contain a mixture of ground substance and a dose of hot water, at least one piston 430 adapted to compress the ground substance and arranged for entering in such chamber 420 from an open end to be able to push hot water through at least one filter 440. A controller (not shown) allows selectively determining the dose of ground substance and of hot water to be sent to a delivery chamber.

Advantageously, such chamber 420 comprises at least one container 421 of the mixture of ground substance and of hot water. The container 421 is heated at least partially by at least one external source, in order to neutralize the flow of heat, from the mixture of ground substance and of hot water through the container 421.

In particular, the container 421 comprises at least one wall, whose external surface is licked by a thermal fluid heated by the external source, to avoid the cooling of the mixture of ground substance and of hot water delimited by the internal surface of the container 421.

Moreover, the container 421 houses inside a liner 422, in order to form a hollow space occupied and crossed by the thermal fluid heated by the external source.

The infusing unit 400 according to the present invention can further comprise connecting means in inlet and in outlet 451, 452, which allow the sliding of the thermal fluid between the external source and the wall of the container 421.

Through the controller it is possible to set the temperature of the thermal fluid and activation time of the external source depending on a measured temperature value of the mixture of ground substance and of hot water inside the container 421.

The external source can be programmed to be activated in different cases such as, for example, at the beginning of the delivery and/or always for every delivery and/or after a certain time after the last delivery and/or at a fluid temperature depending on the heating time.

The infusing unit for preparing beverages of the present invention allows reaching the above objects.

In fact, the infusing unit is heated by leaching a fluid inside a hollow space. The hollow space is placed between the container of the infusion chamber of the infusing body and an external seat or external liner. The infusing unit is made indispensable to be able to reduce the amount of heat absorbed by the cold walls during the infusion of the product (coffee, tea, etc.).

The invention allows obtaining: better tolerance of the final temperature of the infusion; lower thermal dispersion during the infusion process.

Through heating and leaching of a fluid, a controlled temperature and time, it is possible to increase the temperature of the infusion chamber till the desired value. The infusing unit is composed of a fluid inlet fluid at a set and/or variable temperature, a connection tube with the infusion chamber and an outlet tube from the infusion chamber.

It is possible to decide when fluid must be leached: at the beginning of the delivery, always for every delivery, every x time from the last delivery, set the fluid temperature depending on the leaching time for managing the temperature of the infusion chamber.

## Claims

1. Infusing unit (400) for preparing beverages comprising at least one hopper (410) adapted to house a certain dose of a ground substance, at least one infusion chamber (420) used for preparing the infused beverage and containing a mixture of ground substance and a dose of hot water, at least one piston (430) adapted to compress the ground substance, said piston (430) being arranged for entering in said infusion chamber (420) from an open end to be able to push hot water through at least one filter (440), at least one controller for selectively determining the dose of ground substance and of hot water to be sent to a delivery chamber, said infusion chamber (420) comprising at least one container (421) of the mixture of ground substance and of hot water, said container (421) being heated at least partially by at least one external source in order to neutralize the flow of heat from the mixture of ground substance and of hot water through said container (421),
**characterised in that**:
- said container (421) comprises at least one wall, whose external surface is licked by a thermal fluid heated by the external source, to avoid cooling the mixture of ground substance and of hot water delimited by the internal surface of said container (421);
- said container (421) is inside a liner (422), in order to form a hollow space occupied and crossed by the thermal fluid heated by the external source;
- the infusing unit (400) further comprises connecting means in inlet and in outlet (451, 452) adapted to allow sliding the thermal fluid between the external source and the wall of said container (421);
- through said controller, temperature of the thermal fluid and activation time of the external source are set depending on a measured temperature value of the mixture of ground substance and of hot water in said container (421); and
- the external source is programmed to be activated at the beginning of the delivery and/or always for every delivery and/or after a certain time from the last delivery and/or at a fluid temperature depending on the heating time.

## Patentansprüche

1. Aufgusseinheit (400) für die Zubereitung von Getränken, die mindestens einen Trichter (410) enthält, der dazu dient, eine bestimmte Dosis einer gemahlenen Substanz aufzunehmen, mindestens eine Aufgusskammer (420), die verwendet wird, um das Aufgussgetränk zuzubereiten, und eine Mischung der gemahlenen Substanz und eine Dosis Warmwasser enthält, mindestens einen Kolben (430), der dazu dient, die gemahlene Substanz zusammenzupressen, der genannte Kolben (430) ist angebracht, um von einem offenen Ende in die genannte Aufgusskammer (420) einzudringen, um das Warmwasser durch mindestens einen Filter (440) zu schieben, mindestens einer Kontrollvorrichtung, um selektiv die Dosis der gemahlenen Substanz und des Warmwassers zu bestimmen, die in eine Ausgabekammer geleitet werden soll, die genannte Aufgusskammer (420) enthält mindestens einen Behälter (421) der Mischung der gemahlenen Substanz und des Warmwassers, der genannte Behälter (421) wird mindestens teilweise durch mindestens eine externe Quelle erhitzt, um den Hitzestrom der Mischung der gemahlenen Substanz und des Warmwassers durch den genannten Behälter (421) zu neutralisieren, und ist **dadurch gekennzeichnet, dass**:
- der genannte Behälter (421) mindestens eine Wand enthält, deren Außenfläche durch eine Wärmeflüssigkeit bespült wird, die durch die externe Quelle erhitzt wurde, um die Abkühlung der Mischung der gemahlenen Substanz und des Warmwassers zu vermeiden, die durch die Innenfläche des Behälters (421) umgrenzt wird;
- sich der genannte Behälter (421) in einem Mantel (422) befindet, um einen Zwischenraum zu bilden, der von der durch die externe Quelle erhitzten Wärmeflüssigkeit besetzt und durchströmt wird;
- die Aufgusseinheit (400) außerdem Verbindungsmittel am Ein- und Ausgang (451, 452) enthält, die dazu dienen, den Durchfluss der Wärmeflüssigkeit zwischen der externen Quelle und der Wand des genannten Behälters (421) zu ermöglichen;
- die Temperatur der Wärmeflüssigkeit und die Aktivierungszeit der externen Quelle aufgrund eines gemessenen Temperaturwertes der Mischung der gemahlenen Substanz und des Warmwassers im genannten Behälter (421) durch die genannte Kontrollvorrichtung eingestellt werden; und
- die externe Quelle programmiert ist, um am Anfang der Ausgabe und/oder immer für jede Ausgabe und/oder nach einer bestimmten Zeit nach der letzten Ausgabe und/oder bei einer Temperatur der Flüssigkeit aufgrund der Erhitzungszeit aktiviert zu werden.

## Revendications

1. Groupe d'infusion (400) pour préparer des boissons comprenant au moins une trémie (410) apte à accueillir une dose donnée d'une substance moulue, au moins une chambre d'infusion (420) utilisée pour préparer la boisson infusée et contenant un mélange de substance moulue et une dose d'eau chaude, au moins un piston (430) apte à comprimer la substance moulue, le piston (430) étant prédisposé pour entrer dans la chambre d'infusion (420) à travers une extrémité ouverte pour pouvoir pousser l'eau chaude à travers au moins un filtre (440), au moins un contrôleur pour déterminer sélectivement la dose de substance moulue et d'eau chaude à envoyer dans une chambre de distribution ; la chambre d'infusion (420) comprend au moins un conteneur (421) du mélange de substance moulue et d'eau chaude ; le conteneur (421) est réchauffé au moins partiellement par une source externe afin de neutraliser le flux de chaleur du mélange de substance moulue et d'eau chaude à travers le conteneur (421), **caractérisé en ce que** :
- le conteneur (421) comprend au moins une paroi dont la surface externe est baignée par un fluide thermique réchauffé par la source externe, pour éviter le refroidissement du mélange de substance moulue et d'eau chaude délimitée par la surface interne du conteneur (421) ;
- le conteneur (421) se trouve à l'intérieur d'une chemise (422) afin de former un espace occupé et traversé par le fluide thermique réchauffé par la source externe ;
- le groupe d'infusion (400) comprend par ailleurs des moyens de raccordement en entrée et en sortie (451, 452) aptes à permettre l'écoulement du fluide thermique entre la source externe et la paroi du conteneur (421) ;
- le contrôleur permet de programmer la température du fluide thermique et le temps d'activation de la source externe en fonction d'une valeur mesurée de température du mélange de substance moulée et d'eau chaude dans le conteneur (421) ; et
- la source externe est programmée pour être activée au début de la distribution et/ou toujours pour chaque distribution et/ou après un certain temps à partir de la dernière distribution et/ou à une température du fluide en fonction du temps de chauffage.
